# EUROPEAN PATENT SPECIFICATION

(11) **EP 3 494 723 B1**
(45) Date of publication and mention of the grant of the patent: **08.01.2020**
(21) Application number: 18703759.3
(22) Date of filing: 05.02.2018
(51) Int. Cl.: H04W 16/14, H04M 15/00, H04W 4/24, H04W 88/08, H04W 88/14

(54) **METHODS AND APPARATUS FOR INDICATION OF DATA TRAFFIC CARRIED OVER UNLICENSED SPECTRUM**
VERFAHREN UND VORRICHTUNG ZUR ANZEIGE EINES DATENVERKEHRS ÜBER EIN UNLIZENZIERTES SPEKTRUM
PROCÉDÉ ET APPAREIL DESTINÉS À UNE INDICATION DE TRAFIC DE DONNÉES TRANSPORTÉES SUR UN SPECTRE SANS LICENCE

(30) Priority: 06.02.2017 US 201762455335 P
(43) Date of publication of application: 12.06.2019
(60) Divisional application: 19204416.2
(73) Proprietor: Telefonaktiebolaget LM Ericsson (Publ), 164 83 Stockholm (SE)
(72) Inventor: SULTANA, Shabnam, Montreal, H3W 2N3 (CA); ROMMER, Stefan, 426 74 Västra Frölunda (SE); BERGSTRÖM, Mattias, 192 70 Sollentuna (SE); WITTBERG, Mikael, 753 41 Uppsala (SE); LÖVSÉN, Lars, 413 14 Göteborg (SE); TÖRNKVIST, Robert, 371 54 Karlskrona (SE); SCHLIWA-BERTLING, Paul, 590 71 Ljungsbro (SE)
(74) Representative: Ericsson
(86) International application number: PCT/EP2018/052782
(87) International publication number: WO 2018/141953

(56) References cited:
- US-A1- 2016 219 590
- "3rd Generation Partnership Project; Technical Specification Group Services and System Aspects; Study on unlicensed spectrum offloading system enhancements (Release 15)", 3GPP STANDARD; 3GPP TR 23.729, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.1.1, 20 December 2016 (2016-12-20), pages 1-9, XP051230195, [retrieved on 2016-12-20]
- NEC: "WLAN-LTE architecture", 3GPP DRAFT; R2-151424 WLAN_LTE ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 10 April 2015 (2015-04-10), pages 1-3, XP050953083, Retrieved from the Internet: URL:http://www.3gpp.org/ftp/tsg_ran/WG2_RL 2/TSGR2_89bis/Docs/ [retrieved on 2015-04-10]

## Description

### Technical Field

The present disclosure relates to radio access over unlicensed spectrum.

### Background

Third Generation Partnership Project (3GPP) has defined several solutions for how radio access over unlicensed spectrum can be utilized together with 3GPP radio access over licensed spectrum. These solutions are:
- License Assisted Access (LAA)
- Long Term Evolution (LTE) integrated Wireless Local Area Network (WLAN) Access (LWA) and LTE
- LTE/WLAN Radio Level Integration Using IPsec Tunnel (LWIP)

In the LAA alternative, LTE radio technology is used over unlicensed spectrum while in LWA and LWIP options WLAN (IEEE 802.11, commonly referred to as WiFi) technology is used over unlicensed spectrum. In the LWIP case there is an IPSec tunnel between the User Equipment device (UE) and the enhanced or evolved Node B (eNB) while in LWA there is no additional IPSec tunneling between the UE and the eNB.

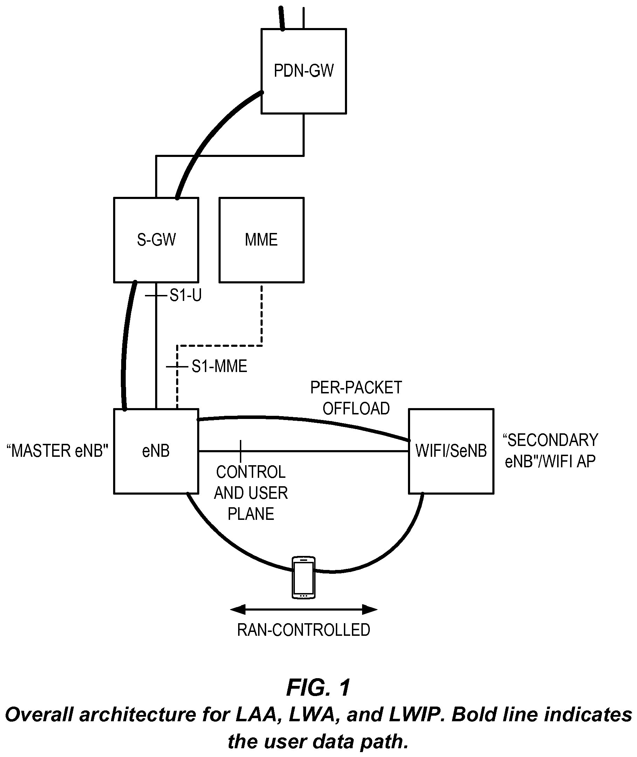

The overall architecture common for all three options is shown in **Figure 1****.** The difference in the three options is whether the secondary cell is a WiFi Access Point (AP) (for LWA and LWIP) or a LTE eNB (for LAA) and whether an IPSec tunnel is established between the UE and the eNB via the secondary cell (for LWIP) or no such IPSec tunnel is needed (for LAA and LWA).

There are thus two user data paths between the UE and the Master eNB (MeNB), one via the licensed spectrum (directly UE - MeNB) and one via unlicensed spectrum (via the secondary eNB (SeNB) / WiFi AP). The Radio Access Network (RAN) (MeNB) controls the usage of whether user data traffic goes via licensed or unlicensed spectrum. This can be done on a per bearer, per Internet Protocol (IP) flow, or per packet basis. The core network (including the Mobility Management Entity (MME), Serving Gateway (S-GW), and Packet Data Network (PDN) Gateway (P-GW)) is not aware of whether a certain user data packet or IP flow was carried over the licensed or unlicensed spectrum.

### Summary

Using existing technology, there is no way for the Core Network (CN) nodes to know whether user data traffic was carried via licensed spectrum (e.g. by a MeNB) or via unlicensed spectrum (e.g. by a SeNB or a WiFi AP) as this is controlled by the Radio Access Network (RAN) (e.g. the MeNB) and thus hidden from the CN. This causes a problem because it is not possible to differentiate CN features such as charging for one or the other type of access or spectrum. Such differentiation may be required in certain regulatory domains where it is not allowed for service providers to charge for unlicensed spectrum use, or at least not charge in the same way for traffic that was carried over unlicensed and traffic that was carried over licensed spectrum.

The invention is set out in the appended claims.

The embodiments and/or examples disclosed in the following description which are not covered by the appended claims are considered as not being part of the invention.

### Brief Description of the Drawings

The accompanying drawing figures incorporated in and forming a part of this specification illustrate several aspects of the disclosure, and together with the description serve to explain the principles of the disclosure.
**Figure 1** illustrates an overall architecture for License Assisted Access (LAA), Long Term Evolution (LTE) - integrated Wireless Local Area Network (WLAN) Access (LWA) and LTE, and LTE/WLAN Radio Level Integration using IPsec tunnel (LWIP);
**Figure 2** illustrates one example of a wireless system (e.g., a cellular communications network) in which embodiments of the present disclosure may be implemented;
**Figure 3** is a call flow diagram that illustrates one example implementation of some embodiments of the present disclosure;
**Figure 4** is a call flow diagram that illustrates another example implementation of some embodiments of the present disclosure;
**Figures 5** and 6 illustrate example embodiments of a wireless device (e.g., a User Equipment device (UE)); and
**Figures 7** through **9** illustrate example embodiments of a network node.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a Core Network (CN). Some examples of a CN node include, e.g., a Mobility Management Entity (MME), a Packet Data Network (PDN) Gateway (P-GW), a Service Capability Exposure Function (SCEF), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell;" however, particularly with respect to 5G NR concepts, beams may be used instead of cells and, as such, it is important to note that the concepts described herein are equally applicable to both cells and beams.

Embodiments of the present disclosure provide ways in which the Radio Access Network (RAN) can provide information to the CN on the usage of unlicensed spectrum. The CN can take this information into account when generating Charging Data Records (CDRs), when it performs online charging, when it performs inter-operator settlement, etc.

Embodiments of the present disclosure include one or more, and potentially all, of the following principles:
- The RAN (e.g., MeNB and/or SeNB and/or WiFi AP) provides an indication to CN whether the capability/possibility to use unlicensed spectrum exists or not. This indication is provided per UE, at least taking into account eNB capabilities, e.g., taking into account MeNB and/or SeNB and/or WiFi AP or similar). In case the eNB knows the UE capabilities (e.g., capability to use unlicensed spectrum) also those can be taken into account, otherwise it is just an indication of the eNB/RAN capability(e.g., capability to use unlicensed spectrum). If this indication is only representing the eNB/RAN capability and not UE capability, it is not an indication that unlicensed spectrum can be used as it also depends on UE capabilities.
- The RAN (e.g., the MeNB) may further provide an indication whether unlicensed access was actually used to carry data traffic for a certain UE.
- In case traffic volume information is needed for how much traffic was carried over unlicensed spectrum (e.g. by a SeNB or a WiFi AP), the RAN (e.g., the MeNB) may provide information (e.g., counters) to the CN indicating how much traffic was carried over unlicensed versus licensed spectrum. For example, the RAN may provide information indicating the total amount of traffic for a certain UE (and optionally bearer) and/or a ratio (percentage) for how much was carried over unlicensed spectrum. Alternatively, the RAN provides a separate indicator for how much traffic was sent over unlicensed or licensed spectrum, or just an indicator for how much was carried over unlicensed access.
- These indications and/or counters may be provided over the S1-MME interface to the MME every time a new eNB is used for a UE (e.g., from the eNB in a Service Request procedure, from the target eNB in a handover procedure, etc.), and/or it may be provided when an eNB stops being used for a UE (from the eNB at S1 release, from the source eNB in a handover procedure, etc.)
- The MME can take the UE capabilities into account. Such UE capabilities can be signaled in the normal (i.e., conventional) way to the MME. They can, e.g., be provided at attach, or explicitly requested by the MME at a later stage. It is assumed that the UE capability to use License Assisted Access (LAA), LTE Integrated Wireless Local Area Network (WLAN) Access (LWA), and/or LTE/WLAN Radio Level Integration Using IPsec Tunnel (LWIP) is included in the "capability tree" provided in the existing Evolved Packet System (EPS).
- The MME can provide this information to the Serving Gateway (S-GW) at every interaction where the S-GW is informed about eNB Tunnel Endpoint Identifiers (TEIDs) (establishment, modification, or release of S1-U tunnel endpoint). The S-GW can then add the information in its CDRs and/or provide the information to the P-GW. Alternatively, the MME may generate log files (or CDRs) containing {eNB Identifier (ID), capability, time stamps, etc.} for later offline processing and provisioning to charging system, Operation and Management (O&M) system, S-GW/P-GW, or other entity.
- The CN may furthermore provide an indication to an eNB on whether usage of unlicensed spectrum is allowed for a certain UE, or for a certain bearer of a UE.
- For online charging there might be a quota consumption to report before the network gets the indication from the RAN whether unlicensed access was actually used to carry data traffic. The charging domain can derive a prediction from historical (CDR) data what the likely distribution will be and use that in the charging process.

The CN can be informed about if traffic was carried over unlicensed spectrum, and also how much. By this the CN can adjust the charging for the subscriber. Other usage of the information is not precluded (e.g., inter-operator settlement, statistics, etc.).

Note that while many of the details included herein relate to the use of embodiments of the present disclosure in a 3GPP LTE network, the present disclosure is not limited thereto. Rather, embodiments of the present disclosure may also be used in other types of networks (e.g., 5G networks).

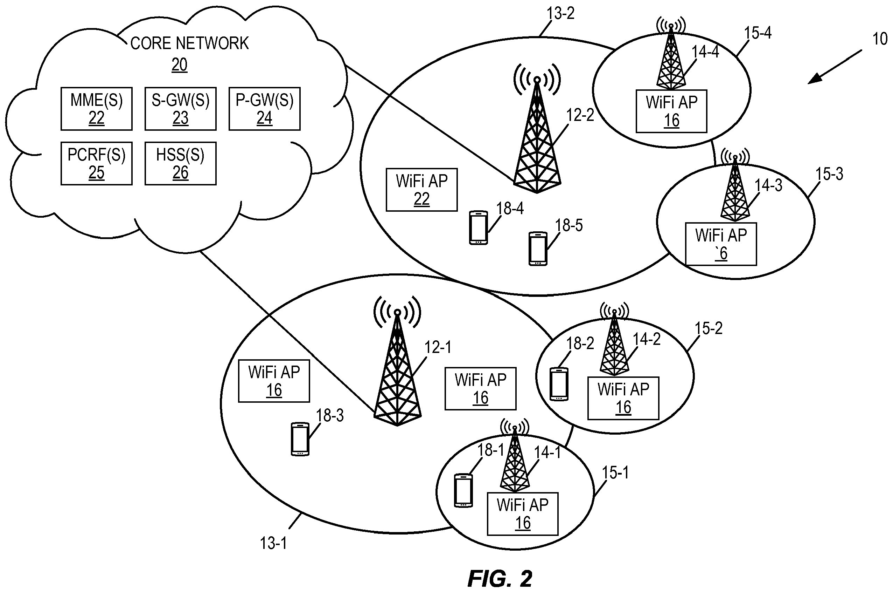

**Figure 2** illustrates one example of a wireless system 10 in which embodiments of the present disclosure may be implemented. In the embodiments described herein, the wireless system 10 includes a 3GPP LTE network that includes a RAN, which is an Evolved Universal Terrestrial Radio Access Network (E-UTRAN) in this example. The RAN includes a number of high-power, or macro, radio access nodes 12 that serve corresponding macro cells 13 as well as a number of low-power radio access nodes 14 that serve corresponding small cells 15. Further, while only one cell 13, 15 is illustrated for each radio access node 12, 14, each radio access node 12, 14 (and in particular each of the high-power radio access nodes 12) may serve multiple cells 13, 15. Further, in some embodiments, some cells 13, 15 are in the licensed spectrum and some other cells 13, 15 are in the unlicensed spectrum. However, in other embodiments, all of the cells 13, 15 are in the licensed spectrum. In this example, the high-power radio access nodes 12 are eNBs and, as such, are sometimes referred to herein as eNBs 12.

The wireless system 10 may, in some embodiments, include WiFi Access Points (APs) 16 that operate in the unlicensed spectrum. Note that while WiFi is referred to herein as an example, the embodiments disclosed herein are not limited to any particular type of WiFi; rather, WiFi should be understood as representing any suitable type of WLAN technology (e.g. as defined by IEEE 802.11) that operates in the unlicensed spectrum.

UEs 18 (more generally wireless devices) wirelessly transmit signals to and receive signals from the radio access nodes 12, 14 and/or the WiFi APs 16, depending on the embodiment. For example, the UE 18-1 may utilize LAA technology to connect to the macro cell 13-1 (as a PCell) of the high-power radio access node 12-1 in the licensed spectrum and to connect to the cell 15-1 (as an SCell) of the low-power radio access node 14-1 in the unlicensed spectrum. In other embodiments, the UE 18-1 may use LWA or LWIP via the WiFi AP 16.

The wireless system 10, and in particular the LTE network, also includes a CN 20, which in this example is an Evolved Packet Core (EPC). The CN 20 includes a number of CN nodes including, in this example, one or more MMEs 22, one or more S-GWs 23, one or more P-GWs 24, one or more Policy and Charging Rules Functions (PCRFs) 25, and one or more Home Subscriber Service (HSS) nodes 26. The conventional functionality of each of the CN nodes is well known to those of skill in the art.

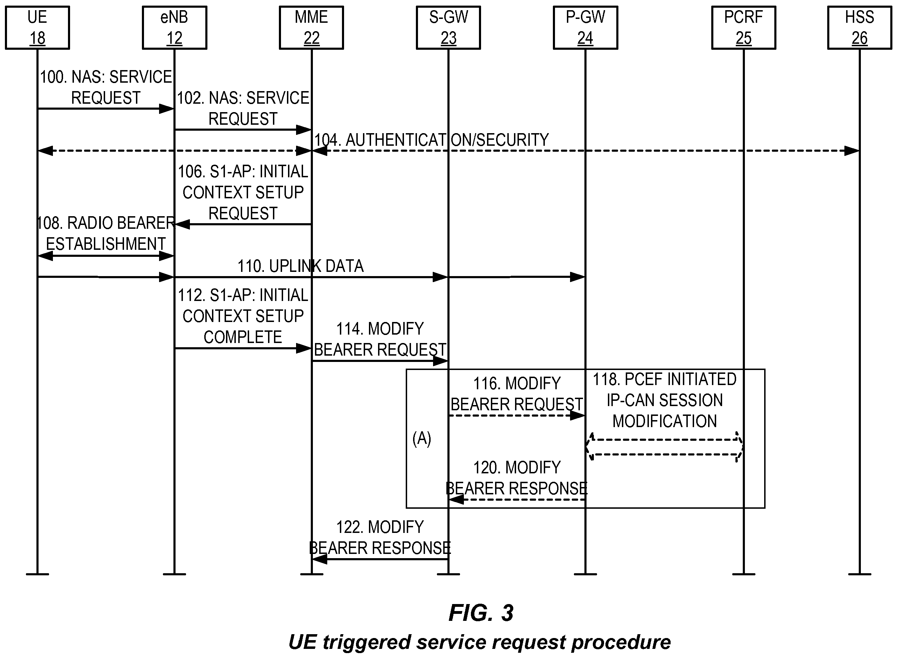

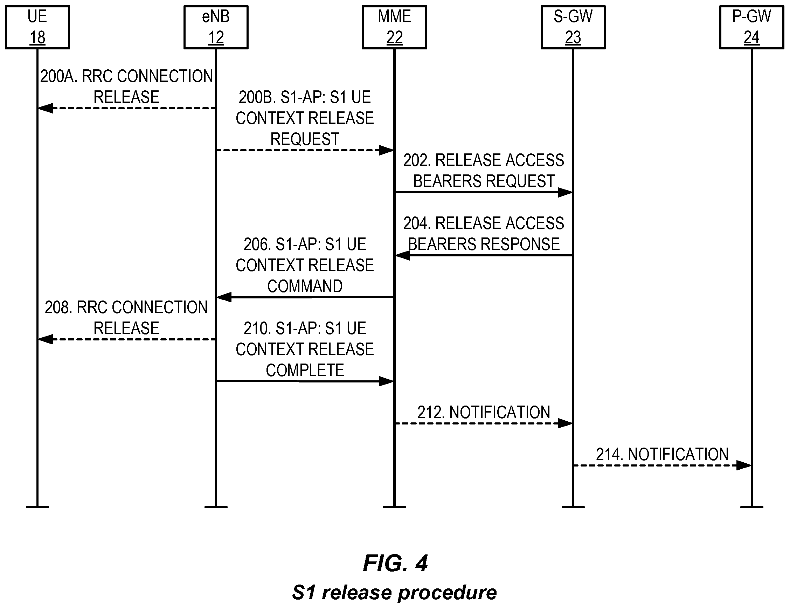

Example call flows are shown in Figures 3 and 4, each of which illustrate example implementations of at least some aspects of the present disclosure. Note that there are other call flows that would be impacted and would show other variants of the present disclosure. The call flows in Figures 3 and 4 are all based on the call flows in 3GPP Technical Specification (TS) 23.401 (see, e.g., version 14.2.0) and show what would be new compared to existing call flows (note, not all details from prior art 3GPP TS 23.401 etc. are included). Note that while the procedures are described with respect to the eNB 12, the procedures may also be applicable to the low-power radio access node 14 (e.g., home eNB, pico eNB, femto eNB, micro eNB, or the like).

**Figure 3** is a call flow diagram that illustrates a UE triggered service request process according to some embodiments of the present disclosure. Here, user data traffic may be carried via licensed spectrum by the eNB 12 (preferably a MeNB), and via unlicensed spectrum by a SeNB 12 or a WiFi AP 16 (not shown in Figure 3). Preferably, said SeNB/WiFi AP is controlled by the MeNB.
- **Step 100:** The Service Request procedure is, e.g., triggered by the UE 18 in ECM-IDLE status to establish user plane radio bearers for the UE 18.
   The UE 18 sends a Non-Access Stratum (NAS) message Service Request towards the MME 22 encapsulated in a Radio Resource Control (RRC) message to the eNB 12.
- **Step 102:** The eNB 12 forwards NAS message to the MME 22. The NAS message is encapsulated in an S1-AP: Initial UE Message (NAS message, Tracking Area Identity (TAI) + E-UTRAN Cell Global Identifier (ECGI) of the serving cell, System Architecture Evolution (SAE) Temporary Mobile Subscriber Identity (S-TMSI), Closed Subscriber Group (CSG) ID, CSG access mode, RRC establishment cause).
   Preferably, the eNB 12 includes an indication on whether it is possible to use unlicensed access for this UE 18. Alternatively, this is done as part of step 114. This capability at least takes into account eNB/RAN capability.
- **Step 104:** NAS authentication/security procedures as defined in clause 5.3.10 of 3GPP TS 23.401 on "Security function" may be performed.
- **Step 106:** The MME 22 sends an S1-AP: Initial Context Setup Request (S-GW address, S1-TEID(s) (uplink), EPS Bearer Quality of Service(s) (QoS(s)), security context, MME signaling connection ID, handover restriction list, CSG membership indication) message to the eNB 12. The MME 22 may indicate to the eNB 12 whether use of unlicensed spectrum is allowed or not for this UE 18.
- **Step 108:** The eNB 12 performs the radio bearer establishment procedure.
- **Step 110:** The uplink data from the UE 18 can now be forwarded by the eNB 12 to the S-GW 23.
- **Step 112:** The eNB 12 sends an S1-AP: Initial Context Setup Complete (eNB address, list of accepted EPS bearers, list of rejected EPS bearers, S1 TEID(s) (downlink)) message to the MME 22. The eNB 12 may include an indication on whether it is possible to use unlicensed access for this UE 18. Alternatively, this is part of step 102. This capability at least takes into account eNB/RAN capability.
- **Step 114:** The MME 22 sends a Modify Bearer Request message (eNB address, S1 TEID(s) (downlink) for the accepted EPS bearers, a Delay Downlink Packet Notification Request, Radio Access Technology (RAT) Type, MO exception data counter) per PDN connection to the S-GW 23.
   The MME 22 may take UE capabilities and the indication from the eNB 12 into account to determine if unlicensed spectrum can be used by the UE 18 at this eNB 12. The MME 22 may store the "capability to use unlicensed access" in an internal log file or CDR for later processing, or for later providing to some other node.
- **Step 116:** If the RAT type has changed compared to the last reported RAT type or if the UE's location and/or Information Elements (IEs) and/or UE time zone and/or if Idle State Signaling Reduction (ISR) is not activated and the serving network ID and/or the indication UE available for end to end signaling are present in step 114, the S-GW 23 shall send the Modify Bearer Request message (RAT type, RRC establishment cause) per PDN connection to the P-GW 24.
   If the capability to use unlicensed access (as indicated in step 102 or 112 above) has changed compared to the last reported capability of unlicensed access, the S-GW 23 may also send a Modify Bearer Request message per PDN connection to the P-GW 24 to indicate this.
- **Step 118:** If dynamic Policy and Charging Control (PCC) is deployed, the P-GW 24 interacts with the PCRF 25 to get the PCC rule(s) according to the RAT type by means of a Policy an Charging Enforcement Function (PCEF) initiated IP-CAN Session Modification procedure as defined in 3GPP TS 23.203. If dynamic PCC is not deployed, the P-GW 24 may apply a local QoS policy.
   If a report on the use of unlicensed access was provided in step 116, it is preferred that the P-GW 24 stores this information in log files / CDRs and may use it for online charging purposes (e.g., provide the information to the Online Charging System (OCS).
- **Step 120:** The P-GW 24 sends the Modify Bearer Response to the S-GW 23.
- **Step 122:** The S-GW 23 shall return a Modify Bearer Response (S-GW address and TEID for uplink traffic) to the MME 22 as a response to a Modify Bearer Request message, or a Modify Access Bearers Response (S-GW address and TEID for uplink traffic) as a response to a Modify Access Bearers Request message.

**Figure 4** is a call flow diagram that illustrates a S1 release procedure according to some embodiments of the present disclosure. Here, user data traffic is carried via licensed spectrum by the eNB 12 (preferably a MeNB) and via unlicensed spectrum by a SeNB 14 or a WiFi AP 16 (not shown in Figure 4). Preferably, said SeNB/WiFi AP is controlled by the MeNB.
- **Step 200**
   A. In certain cases the eNB 12 may release the UE's signaling connection before or in parallel to requesting the MME 22 to release the S1 context, e.g., the eNB 12 initiates an RRC Connection Release for Circuit Switched (CS) fallback by redirection.
   B. If the eNB 12 detects a need to release the UE's signaling connection and all radio bearers for the UE 18, the eNB 12 sends an S1 UE Context Release Request (Cause) message to the MME 22.
      It is preferred that the eNB 12 includes an indication on whether unlicensed access was used for this UE 18. Additionally or alternatively, the eNB 12 may include information (e.g., counters) indicating how much traffic was carried over unlicensed access, or other information describing how much traffic was carried over unlicensed access (e.g., ratio/percentage between traffic volume over unlicensed and licensed spectrum). Alternatively, it is done as part of step 210.
- **Step 202:** The MME 22 sends a Release Access Bearers Request (Abnormal Release of Radio Link Indication) message to the S-GW 23 that requests the release of all S1-U bearers for the UE 18, or the S11-U in control plane Cellular Internet of Things (CloT) EPS optimization if buffering is in the S-GW 23.
   The MME 22 may forward the information in usage over unlicensed access if provided in step 200B, i.e. forward information comprising said indication on whether unlicensed access was used and/or information indicating how much traffic was carried over unlicensed access etc.
- **Step 204:** If the S-GW 23 has received a Release Access Bearers Request, the S-GW 23 releases all eNB related information (address and TEIDs), or the MME TEIDs related information in control plane CloT EPS optimization (address and TEIDs), for the UE 18 and responds with a Release Access Bearers Response message to the MME 22.
- **Step 206:** The MME 22 releases S1 by sending the S1 UE Context Release Command (Cause) message to the eNB 12.
- **Step 208:** If the RRC connection is not already released, the eNB 12 sends a RRC Connection Release message to the UE 18 in Acknowledged Mode. Once the message is acknowledged by the UE 18, the eNB 12 deletes the UE's context.
- **Step 210:** The eNB 12 confirms the S1 Release by returning an S1 UE Context Release Complete (ECGI, TAI) message to the MME 22. With this, the signaling connection between the MME 22 and the eNB 12 for that UE 18 is released.
   The eNB 12 may include an indication on whether unlicensed access was used for this UE 18. Additionally or alternatively, the eNB 12 may include information (e.g., counters) for how much traffic was carried over unlicensed access, or other information describing how much traffic was carried over unlicensed access (e.g., ratio/percentage between traffic volume over unlicensed and licensed spectrum). Alternatively, it is done as part of step 200B, if step 200B is performed. The MME 22 may store the "capability to use unlicensed access" in an internal log file or CDR for later processing, or for later providing to some other node.
- **Step 212:** The MME 22 may send a message to the S-GW 23 to notify the S-GW 23 about the information about usage of unlicensed spectrum, e.g. forward information comprising said indication on whether unlicensed access was used and/or information indicating how much traffic was carried over unlicensed access etc. This may, e.g., be done in a Modify Bearer Request message. The S-GW 23 may insert this information into S-GW CDRs.
- **Step 214:** The S-GW 23 may send a message to the P-GW 24 to notify the P-GW 24 about the information about usage of unlicensed spectrum. This may, e.g., be done in a Modify Bearer Request message. If provided, the P-GW 24 stores this information in log files / CDRs and may use it for online charging purposes (e.g., provide the information to the OCS.

Note that the call flows for handover and tracking area updates may also be impacted by the present disclosure. For example, in case of handover, the source eNB may provide information about the capability as well as actual usage of unlicensed spectrum, and the target eNB may provide information about the capability to use unlicensed spectrum.

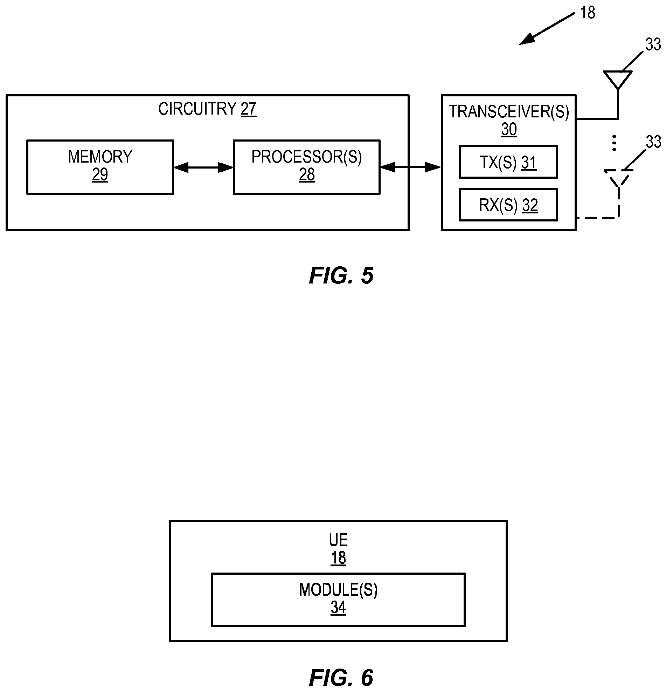

**Figure 5** is a schematic block diagram of the UE 18 according to some embodiments of the present disclosure. As illustrated, the UE 18 includes circuitry 27 comprising one or more processors 28 (e.g., Central Processing Units (CPUs), Application Specific Integrated Circuits (ASICs), Field Programmable Gate Arrays (FPGAs), Digital Signal Processors (DSPs), and/or the like) and memory 29. The UE 18 also includes one or more transceivers 30 each including one or more transmitters 31 and one or more receivers 32 coupled to one or more antennas 33. In some embodiments, the functionality of the UE 18 described above may be implemented in hardware (e.g., via hardware within the circuitry 27 and/or within the processor(s) 28) or be implemented in a combination of hardware and software (e.g., fully or partially implemented in software that is, e.g., stored in the memory 29 and executed by the processor(s) 28).

In some embodiments, a computer program including instructions which, when executed by the at least one processor 28, causes the at least one processor 28 to carry out at least some of the functionality of the UE 18 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

**Figure 6** is a schematic block diagram of the UE 18 according to some other embodiments of the present disclosure. The UE 18 includes one or more modules 34, each of which is implemented in software. The module(s) 34 provide the functionality of the UE 18 described herein.

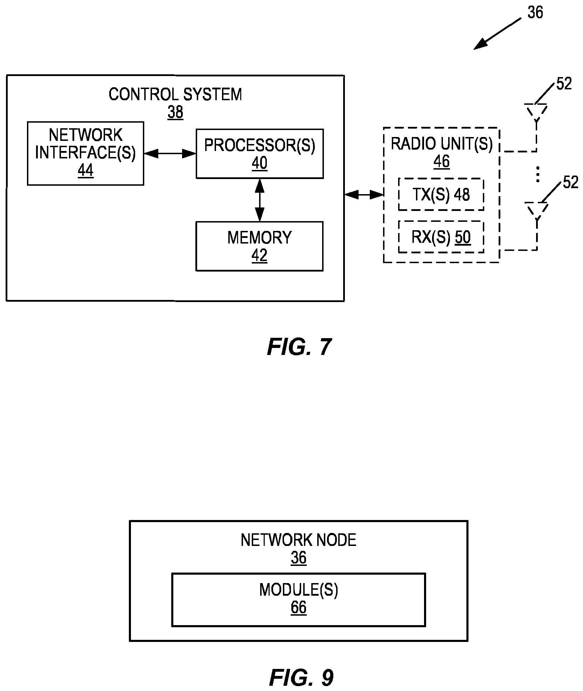

**Figure 7** is a schematic block diagram of a network node 36 (e.g., the radio access node 12 or 14 such as, for example, the eNB 12 or a CN node such as the MME 22, S-GW 23, P-GW 24, PCRF 25, or HSS 26) according to some embodiments of the present disclosure. As illustrated, the network node 36 includes a control system 38 that includes circuitry comprising one or more processors 40 (e.g., CPUs, ASICs, DSPs, FPGAs, and/or the like) and memory 42. The control system 38 also includes a network interface 44. In embodiments in which the network node 36 is a radio access node 14, the network node 36 also includes one or more radio units 46 that each include one or more transmitters 48 and one or more receivers 50 coupled to one or more antennas 52. In some embodiments, the functionality of the network node 36 (e.g., the functionality of the radio access node 14) described above may be fully or partially implemented in software that is, e.g., stored in the memory 42 and executed by the processor(s) 40.

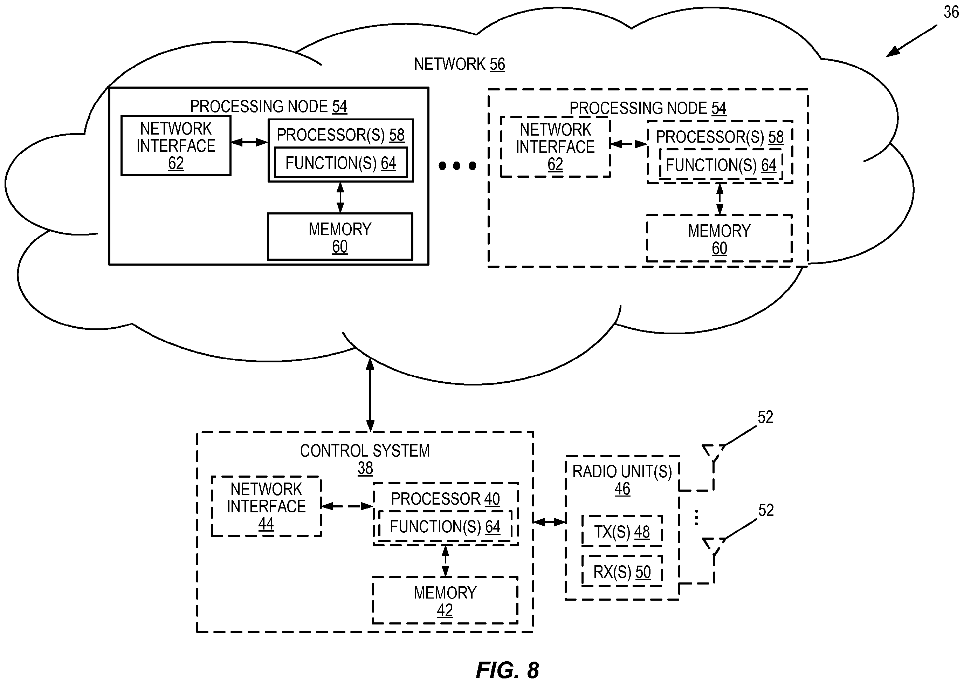

**Figure 8** is a schematic block diagram that illustrates a virtualized embodiment of the network node 36 (e.g., the radio access node 12 or 14 such as, for example, the eNB 12 or a CN node such as the MME 22, S-GW 23, P-GW 24, PCRF 25, or HSS 26) according to some embodiments of the present disclosure. As used herein, a "virtualized" network node 36 is a network node 36 in which at least a portion of the functionality of the network node 36 is implemented as a virtual component (e.g., via a virtual machine(s) executing on a physical processing node(s) in a network(s)). As illustrated, the network node 36 optionally includes the control system 38, as described with respect to Figure 7. In addition, if the network node 36 is the radio access node 14, the network node 36 also includes the one or more radio units 46, as described with respect to Figure 7. The control system 38 (if present) is connected to one or more processing nodes 54 coupled to or included as part of a network(s) 56 via the network interface 44. Alternatively, if the control system 38 is not present, the one or more radio units 46 (if present) are connected to the one or more processing nodes 54 via a network interface(s). Alternatively, all of the functionality of the network node 36 described herein may be implemented in the processing nodes 54 (i.e., the network node 36 does not include the control system 38 or the radio unit(s) 46). Each processing node 54 includes one or more processors 58 (e.g., CPUs, ASICs, DSPs, FPGAs, and/or the like), memory 60, and a network interface 62.

In this example, functions 64 of the network node 36 (e.g., the functions of the radio access node 12 or 14 such as, for example, the eNB 12 or a CN node such as the MME 22, S-GW 23, P-GW 24, PCRF 25, or HSS 26) described herein are implemented at the one or more processing nodes 54 or distributed across the control system 38 (if present) and the one or more processing nodes 54 in any desired manner. In some particular embodiments, some or all of the functions 64 of the network node 36 described herein are implemented as virtual components executed by one or more virtual machines implemented in a virtual environment(s) hosted by the processing node(s) 54. As will be appreciated by one of ordinary skill in the art, additional signaling or communication between the processing node(s) 54 and the control system 38 (if present) or alternatively the radio unit(s) 46 (if present) is used in order to carry out at least some of the desired functions. Notably, in some embodiments, the control system 38 may not be included, in which case the radio unit(s) 46 (if present) communicates directly with the processing node(s) 54 via an appropriate network interface(s).

In some particular embodiments, higher layer functionality (e.g., layer 3 and up and possibly some of layer 2 of the protocol stack) of the network node 36 may be implemented at the processing node(s) 54 as virtual components (i.e., implemented "in the cloud") whereas lower layer functionality (e.g., layer 1 and possibly some of layer 2 of the protocol stack) may be implemented in the radio unit(s) 46 and possibly the control system 38.

In some embodiments, a computer program including instructions which, when executed by the at least one processor 40, 58, causes the at least one processor 40, 58 to carry out the functionality of the network node 36 or a processing node 54 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 60).

**Figure 9** is a schematic block diagram of the network node 36 (e.g., the radio access node 12 or 14 such as, for example, the eNB 12 or a CN node such as the MME 22, S-GW 23, P-GW 24, PCRF 25, or HSS 26) according to some other embodiments of the present disclosure. The network node 36 includes one or more modules 66, each of which is implemented in software. The module(s) 66 provide the functionality of the network node 36 described herein.

The following acronyms are used throughout this disclosure.

| | |
|---|---|
| • 3GPP | Third Generation Partnership Project |
| • 5G | Fifth Generation |
| • AP | Access Point |
| • ASIC | Application Specific Integrated Circuit |
| • CDR | Charging Data Record |
| • CloT | Cellular Internet of Things |
| • CN | Core Network |
| • CPU | Central Processing Unit |
| • CS | Circuit Switched |
| • CSG | Closed Subscriber Group |
| • DSP | Digital Signal Processor |
| • ECGI | Evolved Universal Terrestrial Radio Access Network Cell Global Identifier |
| • eNB | Enhanced or Evolved Node B |
| • EPC | Evolved Packet Core |
| • EPS | Evolved Packet System |
| • E-UTRAN | Evolved Universal Terrestrial Radio Access Network |
| • FPGA | Field Programmable Gate Array |
| • gNB | New Radio Base Station |
| • HSS | Home Subscriber Service |
| • ID | Identifier |
| • IE | Information Element |
| • IP | Internet Protocol |
| • ISR | Idle State Signaling Reduction |
| • LAA | License Assisted Access |
| • LTE | Long Term Evolution |
| • LWA | Long Term Evolution-Integrated Wireless Local Area Network Access |
| • LWIP | Long Term Evolution/Wireless Local Area Network Radio Level Integration Using IPsec Tunnel |
| • MeNB | Master Enhanced or Evolved Node B |
| • MME | Mobility Management Entity |
| • MO | Management Object |
| • MTC | Machine Type Communication |
| • NAS | Non-Access Stratum |
| • NR | New Radio |
| • O&M | Operation and Management |
| • OCS | Online Charging System |
| • PCC | Policy and Charging Control |
| • PCEF | Policy and Charging Enforcement Function |
| • PCRF | Policy and Charging Rules Function |
| • PDN | Packet Data Network |
| • P-GW | Packet Data Network Gateway |
| • QoS | Quality of Service |
| • RAN | Radio Access Network |
| • RAT | Radio Access Technology |
| • RRC | Radio Resource Control |
| • SAE | System Architecture Identity |
| • SCEF | Service Capability Exposure Function |
| • S-GW | Serving Gateway |
| • S-TMSI | System Architecture Identity Temporary Mobile Subscriber Identity |
| • TAI | Tracking Area Identity |
| • TEID | Tunnel Endpoint Identifier |
| • TS | Technical Specification |
| • UE | User Equipment |
| • WLAN | Wireless Local Area Network |

## Claims

1. A method of operation of a Master evolved Node B, MeNB (12) where data traffic is carried over licensed spectrum by the MeNB (12) and over unlicensed spectrum by a Secondary evolved Node B, SeNB (14) or a WiFi access point, WiFi AP (16), and where the MeNB controls whether data traffic is carried via licensed spectrum or via unlicensed spectrum, which method comprises:
providing (200B, 210) an indication to a mobility management entity, MME, (22), which indication indicates how much data traffic was carried over unlicensed spectrum by the SeNB (14) or the WiFi AP (16) for a certain wireless device (18).

2. The method of claim 1 wherein the indication that indicates how much data traffic was carried over the unlicensed spectrum provides a separate indicator for how much traffic was sent over unlicensed or licensed spectrum.

3. The method of claim 1 wherein the indication that indicates how much data traffic was carried over the unlicensed spectrum provides an indicator for how much traffic was sent over unlicensed spectrum.

4. The method of any one of claim 1 or 2 wherein the indication that indicates how much data traffic was carried over the unlicensed spectrum is provided to the MME (22) in a service request procedure or in a handover procedure or in a S1 release procedure.

5. The method of claim 1 wherein providing (200B, 210) the indication to the MME (22) that indicates how much data traffic was carried over the unlicensed spectrum for the certain wireless device (18) comprises providing (200B) the indication to the MME (22) in a UE Context Release Request message or a UE Context Release Complete message.

6. A Master eNB (12) for a wireless system (10), the MeNB adapted to operate according to any one of claim 1 to 4.

## Patentansprüche

1. Verfahren zum Betreiben eines Master-entwickelten Knotens B, MeNB, (12) bei dem der Datenverkehr über das lizenzierte Spektrum durch den MeNB (12) und über das unlizenzierte Spektrum durch einen sekundär entwickelten Knoten B, SeNB, (14) oder einen WiFi-Zugangspunkt, WiFi AP, (16) übertragen wird und bei dem der MeNB steuert, ob der Datenverkehr über das lizenzierte Spektrum oder über das unlizenzierte Spektrum erfolgt, wobei das Verfahren umfasst:
Bereitstellen (200B, 210) einer Angabe an eine Mobilitätsmanagementeinheit, MME, (22), wobei die Angabe angibt, wie viel Datenverkehr über das unlizenzierte Spektrum durch den SeNB (14) oder den WiFi AP (16) für eine bestimmte drahtlose Vorrichtung (18) übertragen wurde.

2. Verfahren nach Anspruch 1, wobei die Angabe, die angibt, wie viel Datenverkehr über das unlizenzierte Spektrum übertragen wurde, eine separate Angabe dafür bereitstellt, wie viel Verkehr über das unlizenzierte oder lizenzierte Spektrum gesendet wurde.

3. Verfahren nach Anspruch 1, wobei die Angabe, die angibt, wie viel Datenverkehr über das nicht lizenzierte Spektrum übertragen wurde, eine Angabe dafür bereitstellt, wie viel Verkehr über das unlizenzierte Spektrum gesendet wurde.

4. Verfahren nach einem der Ansprüche 1 oder 2, wobei die Angabe, die angibt, wie viel Datenverkehr über das unlizenzierte Spektrum übertragen wurde, der MME (22) in einem Dienstanforderungsverfahren oder in einem Übergabeverfahren oder in einem S1-Freigabeverfahren bereitgestellt wird.

5. Verfahren nach Anspruch 1, wobei das Bereitstellen (200B, 210) der Angabe an die MME (22), die angibt, wie viel Datenverkehr über das unlizenzierte Spektrum für die bestimmte drahtlose Vorrichtung (18) übertragen wurde, das Bereitstellen (200B) der Angabe an die MME (22) in einer UE-Kontextfreigabeanforderungsnachricht oder einer UE-Kontextfreigabeabschlussmeldung umfasst.

6. Master-eNB (12) für ein drahtloses System (10), wobei der MeNB angepasst ist, um nach einem der Ansprüche 1 bis 4 betrieben zu werden.

## Revendications

1. Procédé de fonctionnement d'un nœud B évolué maître, MeNB (12) où un trafic de données est transporté sur un spectre sous licence par le MeNB (12) et sur un spectre sans licence par un nœud B évolué secondaire, SeNB (14) ou un point d'accès WiFi, WiFi AP (16), et où le MeNB commande si un trafic de données est transporté via un spectre sous licence ou via un spectre sans licence, lequel procédé comprend :
la fourniture (200B, 210) d'une indication à une entité de gestion de mobilité, MME, (22), laquelle indication indique la quantité de trafic de données qui a été transportée sur un spectre sans licence par le SeNB (14) ou le WiFi AP (16) pour un certain dispositif sans fil (18).

2. Procédé selon la revendication 1 dans lequel l'indication indiquant la quantité de trafic de données qui a été transportée sur le spectre sans licence fournit un indicateur indépendant concernant la quantité de trafic qui a été envoyée sur un spectre sans licence ou sous licence.

3. Procédé selon la revendication 1 dans lequel l'indication indiquant la quantité de trafic de données qui a été transportée sur le spectre sans licence fournit un indicateur concernant la quantité de trafic qui a été envoyée sur un spectre sans licence.

4. Procédé selon l'une quelconque parmi la revendication 1 ou 2 dans lequel l'indication indiquant que la quantité de trafic de données qui a été transportée sur le spectre sans licence est fournie à la MME (22) dans une procédure de demande de service ou dans une procédure de transfert ou dans une procédure de libération S1.

5. Procédé selon la revendication 1 dans lequel la fourniture (200B, 210) de l'indication à la MME (22) qui indique la quantité de trafic de données qui a été transportée sur le spectre sans licence pour le certain dispositif sans fil (18) comprend la fourniture (200B) de l'indication à la MME (22) dans un message de demande de libération de contexte d'UE ou un message complet de libération de contexte d'UE.

6. eNB maître (12) pour un système sans fil (10), le MeNB conçu pour fonctionner selon l'une quelconque des revendications 1 à 4.
